(19) Europäisches Patentamt
European Patent Office
Office européen des brevets

(11) Veröffentlichungsnummer: **0 180 858 B1**

# (12) EUROPÄISCHE PATENTSCHRIFT

(45) Veröffentlichungstag der Patentschrift: **06.03.91**

(51) Int. Cl.$^5$: **C01B 33/187**, C01B 33/32, C04B 35/14

(21) Anmeldenummer: **85113498.1**

(22) Anmeldetag: **24.10.85**

(54) **Formkörper aus silikatischem Material, Verfahren zu ihrer Herstellung und Verwendung.**

(30) Priorität: **03.11.84 DE 3440252**

(43) Veröffentlichungstag der Anmeldung:
**14.05.86 Patentblatt 86/20**

(45) Bekanntmachung des Hinweises auf die Patenterteilung:
**06.03.91 Patentblatt 91/10**

(84) Benannte Vertragsstaaten:
**BE CH DE FR GB IT LI NL SE**

(56) Entgegenhaltungen:
**EP-A- 0 150 442**
**CH-A- 288 419**
**US-A- 3 544 666**
**US-A- 4 061 724**

(73) Patentinhaber: **HOECHST AKTIENGESELLSCHAFT**
**Postfach 80 03 20**
**W-6230 Frankfurt am Main 80(DE)**

(72) Erfinder: **Rieck, Hans-Peter, Dr.**
**Staufenstrasse 13a**
**W-6238 Hofheim am Taunus(DE)**
Erfinder: **Schott, Martin, Dr.**
**Königsteiner Strasse 7**
**W-6374 Steinbach (Taunus)(DE)**
Erfinder: **Russow, Jürgen, Dr.**
**Am Schieferberg 45**
**W-6233 Kelkheim (Taunus)(DE)**

EP 0 180 858 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services

## Beschreibung

Die vorliegende Erfindung betrifft ein Verfahren zur Herstellung von Formkörpern, die in der Hauptsache aus Cristobalit und/oder Tridymit bestehen, ausgehend von Kieselsäuren mit Schichtstruktur.

Die als Ausgangsprodukt eingesetzten Kieselsäuren, bzw. ihre Salze, unterscheiden sich durch ihre Struktur von amorphen Kieselsäuren oder Kieselsäuren mit Gerüststruktur, bzw. deren Salzen, wie z.B. Silicalit (US-PS 40 61 724).

Formkörper aus Cristobalit und/oder Tridymit werden technisch aus Quarz hergestellt. So Kann man Quarzmehl mit 2 bis 3 % Kalkhydrat (als Bindemittel) und etwas Sulfitablauge (zur Verbesserung der Verformbarkeit der Massen) verpressen und die Formlinge anschließend tempern. Dabei bilden sich schließlich bei 1470° Produkte mit hohem Cristobalit-Anteil (Silicasteine). Der Rest besteht aus Tridymit, röntgenamorphem $SiO_2$, etwas Quarz und wenig Wollastonit. Wenn man längere Zeit unterhalb 1470° brennt, lassen sich dagegen Gehalte von bis zu 30 % Tridymit erzielen. Die Silicasteine sind zwar hoch temperaturbeständig; jedoch ist ihre Temperaturwechselbeständigkeit bis 700°C schlecht. Ein Nachteil dieses Verfahrens ist die Notwendigkeit verkittende Produkte zuzusetzen, was dazu führt, daß der fertige Formkörper neben Cristobalit und gegebenenfalls Tridymit noch andere Bestandteile enthält. Pulverförmiger Quarz, Cristobalit oder Tridymit lassen sich allein jedoch nicht zu mechanisch ausreichend stabilen Formlingen verpressen. Ferner kann man Quarzgutsteine, die durch Schmelzen von reinem Quarzsand hergestellt wurden, bei 1400° tempern und kommt so zu kompakten Cristobalit-Steinen. Nachteilig ist hierbei der hohe Energieaufwand für das Schmelzen des Quarzsandes und das Tempern des abgekühlten Quarzgutes. Nachteilig ist insbesondere, daß die Umwandlung von Quarz in Cristobalit sehr hohe Temperaturen erfordert.

Aus US-A-3 544 666 sind Formkörper bekannt, die überwiegend aus Tridymit bestehen und z.T. hohe mechanische Festigkeiten aufweisen. Sie werden erhalten durch Erhitzen von Geyserit mit einer Alkalioxidquelle und einem Bindemittel.

Für manche Zwecke, z.B. für Katalysatorträger, benötigt man chemisch möglichst einheitliche Formkörper. Aber auch bei hochtemperaturfesten Steinen, Röhren oder Gefäßen kann es wichtig sein, daß sie praktisch nur aus einer Komponenten bestehen, da dadurch gewährleistet wird, daß sich die Eigenschaften bei längerer thermischer Belastung nicht ändern. In einem Mehrkomponentensystem kann es dagegen zu einer chemischen Reaktion kommen.

Es bestand daher die Aufgabe, aus chemisch einheitlichem Ausgangsmaterial ein hochtemperaturbeständiges silikatisches Material herzustellen, bei dem die Umwandlung in das Endprodukt leicht verläuft.

Es wurde nun gefunden, daß sich aus Kieselsäuren mit Schichtstruktur und einigen ihrer ein- und zweiwertigen Salze stabile Formlinge herstellen lassen, die beim Tempern in Cristobalit und/oder Tridymit übergehen. Für das Herstellen von Formlingen eröffnen sich mehrere Möglichkeiten, beispielsweise das Extrudieren von langgestreckten Formlingen auf einem Extruder ("dynamisches Pressen"), das Pelletieren von pulverförmigem Ausgangsmaterial unter Zugabe einer später abgedampften Flüssigkeit auf einem Pelletierteller, die Verwendung eines Formwerkzeuges, z.B. einer Stempelpresse ("statisches Pressen") oder einer Walzenpresse zur Herstellung von Briketts, oder Auswalzen.

Gegenstand der vorliegenden Erfindung ist ein Verfahren zur Herstellung von Formkörpern aus silikatischem Material, durch Extrudieren und/oder Pelletieren sowie anschließendes Tempern, das dadurch gekennzeichnet ist, daß man pulverförmige Schichtkieselsäuren der allgemeinen Formel $H_2Si_yO_{2y+1}$, wobei y eine Zahl von 1,7 bis 24 ist, oder deren Salze, in denen H ganz oder teilweise durch mindestens ein Kation aus der Gruppe $Li^+$, $Na^+$, $K^+$, $NH_4{}^+$, $Ca^{2+}$, $Cu^{2+}$ , $Co^{2+}$, $Ni^{2+}$ und $Mg^{2+}$ ersetzt ist, mit Wasser oder einem organischen Lösemittel vermischt, diese Mischung extrudiert und/oder pelletiert, dann trocknet und unter solchen Bedingungen tempert, daß das Ausgangsmaterial in der Hauptsache in Cristobalit und/oder Tridymit umgewandelt wird.

Beim Extrudieren wird durch ein nicht allseitig geschlossenes Formwerkzeug ein endloser Strang einer Paste des silikatischen Materials ausgestoßen, der durch mechanisch arbeitende Zerteiler in einzelne Stücke zerschnitten wird. Hierfür werden eingesetzt z.B. Extruder und Stempelpressen mit offener Form, wie Strangpressen (vgl. Ullmanns Encyklopädie der technischen Chemie, 3. Auflage 1 , S. 734). Die walzenoder röhenförmigen Formlinge werden anschließend getrocknet. Man kann die walzenförmigen Formlinge noch auf einem Pelletierteller abrunden und erhält dann nach Trocknung (meist bei ca. 120°C) formstabile, etwa kugelförmige Granalien die eine erhebliche Härte aufweisen.

Das Tempern erfolgt im allgemeinen bei 500-1700°C.

Je länger die Form ist, durch die die Paste zu pressen ist, umso höher ist die Reibung und der aurzubringende Druck. Bei Verwendung langgestreckter Formen, insbesondere solchen, die zu dünnen Formkörpern führen, ist eine plastische Fließbarkeit der silikatischen Masse wünschenswert. Dies wird

durch Zugabe von Weichmachern und Extrudierhilfen, wie Methylzellulose und Diglykolstearat gefördert und ist für die Herstellung von Wabenkörpern von Bedeutung.

Beim Pelletieren wird auf ein trockenes Pulver unter gleichzeitiger rollierender Bewegung Flüssigkeit aufgesprüht. Dabei wird der Rohstoff zu Pellets aufgebaut (vgl. Ullmanns Encyklopädie, 4. Auflage, 2 , S. 323). Hierfür werden z.B. Pelletierteller und Pelletiertrommeln verwendet. Hohlkugeln lassen sich durch Pelletieren nach dem Verfahren der DE-OS 23 53 631 herstellen.

Die Ausgangsprodukte für das erfindungsgemäße Verfahren sind bekannt oder leicht aus bekannten Produkten herstellbar.

Schichtkieselsäuren und deren Alkalisalze sind in der Natur gefunden worden (H.P. Eugster, Science 157 , 1177 - 1180; T.P. Rooney et al., Amer. Mineral., 54 , 1034 - 1043 (1969); G. Maglione und M. Servant, C.R. Acad. Sci., Ser. D., 277, 1721 - 1724 (1973); J.L. McAtee, Jr. et al., Amer. Mineral., 53 (1968), 2061 -2069).

Für die dort beschriebenen Mineralien Kenyait und Magadiit werden u.a. von Eugster die Formeln $NaSi_{11}O_{20`5}(OH)_4 \cdot 3H_2O$ und $NaSi_7O_{13}(OH)_3 \cdot 3H_2O$ angegeben. Dabei wird unterschieden zwischen chemisch gebundenem Wasser (OH-Gruppen) und Kristall-Wasser. Diese Unterscheidung ist Jedoch nicht mit Sicherheit durchführbar. Man kann die gleichen Substanzen auch als $Na_2Si_{22}O_{45} \cdot 10H_2O$ und $Na_2Si_{14}O_{29}.9H_2O$ formulieren.

Eine Reihe von Alkalisalzen und Kieselsäuren mit Schichtstruktur sind auch schon synthetisch erhalten worden. Aus diesen Alkalisilikaten können durch sauren Ionenaustausch die freien Kieselsäuren gewonnen werden. Dabei bleibt die Schichtstruktur der Verbindungen erhalten.

Ein auch technisch gangbares Verfahren zur Herstellung von kristallinen Alkalischichtsilikaten mit Molverhältnissen $Na_2O/SiO_2$ von 1 : 14 bis 1 : 22 ist Gegenstand der deutschen Patentanmeldung P 34 00 132.8. Nach diesem Verfahren wird ein in Wasser gelöstes oder ein amorphes Alkalisilikat mit einem molaren Verhältnis $M_2O/SiO_2$, wobei M für ein Alkalimetall steht, von 0,24 bis 2,0 mit so viel einer sauren Verbindung versetzt, daß ein molares Verhältnis $M_2O$ (nicht neutralisiert) / $SiO_2$ von 0,05 bis 0,239 erreicht wird, gegebenenfalls durch Verdünnen ein molares Verhältnis $SiO_2/H_2O$ von 1 : 5 bis 1 : 100 eingestellt und die Reaktionsmischung so lange bei einer Reaktionstemperatur von 70 bis 250° C gehalten, bis das Alkalischichtsilikat auskristallisiert ist. Man kann auf diese Weise beispielsweise ein Alkalischichtsilikat mit einem Molverhältnis $Na_2O/SiO_2$ von etwa 1 : 21 mit Kenyait-Struktur erhalten. Durch sauren Ionenaustausch ist daraus die entsprechende freie Säure herstellbar. Die so erhaltenen Verbindungen werden im folgenden als Na-SKS-1 bzw. H-SKS-1 bezeichnet.

In Gegenwart von Impfkristallen mit Magadiit-Struktur läßt sich nach diesem Verfahren auch ein Natriumschichtsilikat mit dem Molverhältnis $Na_2O/SiO_2$ von etwa 1 : 14 herstellen, das Magadiit-Struktur aufweist. Durch sauren Ionenaustausch erhält man hieraus die entsprechende freie Kieselsäure. Diese Verbindungen werden im folgenden als Na-SKS-2 und H-SKS-2 bezeichnet.

Es sind mehrere Schichtsilikate mit der ungefähren Zusammensetzung $Na_2Si_2O_5$ bekannt. Hierzu gehören die folgenden als Ha-SKS-5, Na-SKS-6` Na-SKS-7 und Na-SKS-11 bezeichneten Produkte. Na-SKS-5 läßt sich herstellen gemäß Glastechnischen Ber. 37 , 194 - 200 (1964). Das Produkt ähnelt im Röntgenbeugungsdiagramm $\alpha$-$Na_2Si_2O_5$. Das Röntgenspektrum hat gemäß der Aufstellung in Powder Diffraction File, Inorganic Phases, (Int. Centre f. Diffraction Data) Swarthmore 1983, die Nummer 22-1397. Aus Na-SKS-5 erhält man durch sauren Ionenaustausch die freie Säure H-SKS-5. Dieses Produkt ähnelt im Röntgenbeugungsdiagramm der Kieselsäure $H_2Si_2O_5$-I (F. Liebau, Z. Kristallgr. 120 (1964), 427).

Na-SKS-6 läßt sich herstellen gemäß Zeitschrift für Kristallogr. 129, 396 - 404 (1969). Es ähnelt $\delta$-$Na_2Si_2O_5$. H-SKS-6 erhält man durch sauren Ionenaustausch aus Na-SKS-6. Das Produkt ähnelt im Röntgenbeugungsdiagramm einer Kieselsäure, die in der Aufstellung des Joint Committee on Powder Diffraction Standards die Nummer 27-606 hat.

Na-SKS-7 läßt sich herstellen gemäß Glastechn. Ber. 37 , 194 - 200 (1964). Es ähnelt $\beta$-$Na_2Si_2O_5$.

Na-SKS-11 läßt sich herstellen gemäß Glastechn. Ber. 37 , 194 - 200 (1964), sowie gemäß Zeitschrift für Kristallogr. 129, 396 - 404 (1969). Es ähnelt $\gamma$-$Na_2Si_2O_5$.

Ein technisch gangbarer Weg zur Herstellung von Na-SKS-5, Na-SKS-6 und Na-SKS-11 wird beschrieben in der deutschen Patentanmeldung P 34 17 649.7. Schichtsilikate mit anderer Zusammensetzung sind Na-SKS-9, Na-SKS-10 und Na-SKS-13.

Na-SKS-9 läßt sich herstellen gemäß Bull. Soc. franc. Min. Crist., 95 , 371 - 382 (1972). Es weist die ungefähre Zusammensetzung $NaHSi_2O_5.H_2O$ auf. Das Röntgenspektrum hat die Nummer 27-709.

Na-SKS-10 läßt sich herstellen gemäß Bull. Soc. franc. Min. Crist., 95 , 371 - 382 (1972) sowie gemäß Amer. Mineral., 62 , 763 - 771 (1977). Das Röntgenspektrum hat die Nummer 25-1309. Das Produkt hat die ungefähre Zusammensetzung $NaHSi_2O_5.2H_2O$. Es ähnelt dem Mineral Kanemit für den in der Literatur die

Formel $NaHSi_2O_4(OH)_2.2H_2O$ angegeben ist, die $NaHSi_2O_5.3H_2O$ entspricht.

Na-SKS-13 läßt sich herstellen gemäß Bull. Soc. franc. Min., Crist., 95 , 371 - 382 (1972). Das Röntgenspektrum hat die Nummer 27-708. Das Produkt hat die ungefähre Zusammensetzung $NaHSi_2O_5$.

Bevorzugte Ausgangsprodukte sind wegen ihrer leichten Herstellbarkeit Produkte mit Magadiitstruktur (H-SKS-2) oder Kenyaitstruktur (H-SKS-1). Die entsprechenden Salze haben den weiteren Vorteil, daß der Anteil an $SiO_2$, der später in Tridymit und/oder Cristobalit übergehen kann, besonders hoch ist.

Bei der Behandlung der genannten Natriumsalze von Schichtkieselsäuren mit wäßriger Säure lassen sich die Natriumionen ganz oder teilweise durch $H^+$-Ionen ersetzen und so die freien Kieselsäuren mit Schichtstruktur herstellen. Diese können z.B. mit Lösungen von LiOH, $NH_4OH$ oder $Ca(OH)_2$ in die entsprechenden Salze überführt werden. Da die Alkalisalze der Schichtkieselsäure sich als Ionenaustauscher verhalten, lassen sie sich auch leicht durch Behandlung mit Salzlösungen (einwertige oder zweiwertige Metalle) in Schichtsilikate überführen, in denen $H^+$ (der freien Schichtkieselsäure) ganz oder teilweise durch die einzuführenden Kationen ersetzt ist.

Ebenso läßt sich auch in den Salzen, die zweiwertige Kationen enthalten, durch Behandlung mit verdünnten Säuren ein Teil der Kationen durch Protonen ersetzen. Anschließend kann man die Protonen durch Umsetzung mit dosierten Mengen von $NH_4OH$ ganz oder teilweise durch $NH_4^+$ ersetzen.

Für das erfindungsgemäße Verfahren lassen sich die wasserfreien Schichtkieselsäuren und Schichtsilikate ebenso einsetzen wie die Hydrate dieser Verbindungen. In einigen Fällen sind ohnehin nur die Hydrate bekannt.

Beim Extrudieren soll die zugegebene Menge an Wasser oder dem organischen Lösemittel so groß sein, daß sich aus dem pulverförmigen Schichtsilikat ein Teig, nicht aber eine Flüssigkeit bildet. Die Art des gegebenenfalls eingesetzten organischen Lösemittels ist nicht kritisch. Es soll sich jedoch nicht unter Kohlenstoff-Abscheidung thermisch zersetzen anstatt zu verdampfen. Bevorzugt sind Lösemittel mit einem Siedepunkt von 50 bis 150 °C, insbesondere polare, wasserlösliche Verbindungen, wie einwertige oder mehrwertige aliphatische Alkohole, z.B. Methanol oder Ethylenglykol.

Ein weiteres Verfahren zur Herstellung von Formkörpern aus silikatischem Material durch Verpressen und Tempern ist dadurch gekennzeichnet, daß man pulverförmige Schichtkieselsäuren der allgemeinen Formel $H_2Si_yO_{2y+1}$, wobei y eine Zahl von 1,7 bis 24 ist, oder deren Salze, in denen $H^+$ ganz oder teilweise durch mindestens ein Kation aus der Gruppe $Li^+$, $Na^+$, $K^+$ $NH_4^+$, $Ca^{2+}$, $Mg^{2+}$, $Cu^{2+}$, $Co^{2+}$, $Ni^{2+}$ und $Mg^{2+}$ ersetzt ist, in einem Formwerkzeug unter Druck zu Formlingen verpreßt und man die Formlinge während oder nach dem Pressen unter solchen Bedingungen tempert, daß das Ausgangsmaterial in der Hauptsache in Cristobalit und/oder Tridymit umgewandelt wird. Bei Einsatz angefeuchteter Pulver müssen die Formlinge noch vor dem Tempern getrocknet werden.

Bei diesem Verfahren werden, im Gegensatz zum Extrudieren, allseitig geschlossene Formwerkzeuge eingesetzt. Hierbei legen die Silikatteilchen nur geringe Strecken zurück und die Reibung spielt keine große Rolle.

Die Herstellung von Formlingen in einem Formwerkzeug unter Druck ist dem Fachmann bekannt, beispielsweise aus der Herstellung von Formteilen aus härtbaren organischen Formmassen. Bei diesem Verfahren ist die Anwendung von Wasser oder einem organischen Lösemittel zwar möglich, aber nicht erforderlich. Der anzuwendende Druck ist im allgemeinen höher als beim Extrudieren und liegt meist über 10 bar. Er muß jedenfalls so hoch sein, daß nach dem Entfernen aus dem Formwerkzeug der Formling nicht zerfällt. Darüberhinaus führt ein höherer Arbeitsdruck zu einer höheren Dichte und geringeren Porosität. Der angewandte Druck ist nach oben nur durch die Konstruktion des Formwerkzeuges begrenzt. Drucke von über 5000 bar sind möglich. Bevorzugt sind Drucke von maximal 2000 bar sowie Drucke von über 100 bar, insbesondere Ober 200 bar, vorzugsweise von 400 bis 600 bar. Die so erzeugten Formlinge sind härter als die oben erwähnten Granalien. So läßt sich ein trockenes Pulver aus Schichtkieselsäuren in einem Rohr durch einen Stempel bei einem Druck von 500 bar zu zylinderförmigen Körpern verpressen, die -selbst ohne Tempern - Shore-Härten von über 40 aufweisen können. Dies erleichtert die Handhabung und den Transport in den Temperofen.

Die Bedingungen, unter denen das Ausgangsmaterial in Cristobalit und/oder Tridymit umgewandelt wird , hängen auch etwas vom Ausgangsprodukt selbst ab. Die Tempertemperaturen liegen zwischen 500 bis ca. 1700 °C, wobei die Umwandlung bei hohen Temperaturen rascher verläuft. Die Art des eingesetzten Schichtsilikats ist auch von großem Einfluß darauf, ob Cristobalit, Tridymit oder ein Gemisch der beiden $SiO_2$-Modifikationen erzeugt wird.

Cristobalit entsteht aus den freien Schichtkieselsäuren oder deren Ammoniumsalzen oder den Salzen mit den zweiwertigen Kationen $Cu^{2+}$- $Co^{2+}$ und/oder $Ni^{2+}$. Ebenso verhalten sich die analogen sauren Salze der Schichtkieselsäuren, in denen nur ein Teil der ersetzbaren Protonen durch Ammonium und/oder die genannten zweiwertigen Ionen ersetzt ist oder die neutralen Salze, die neben Ammonium noch

mindestens eines der genannten zweiwertigen Kationen enthalten. Die so einsetzbaren Verbindungen haben die allgemeine Formel $(NH_4)_r$ $M_sH_t$ $Si_y$ $O_{2y+1}$, wobei M für die Kationen $Cu^{2+}$, $Co^{2+}$ und/oder $Ni^{2+}$ steht, y eine Zahl von 1,7 bis 24 ist, r und t Zahlen von 0 bis 2 sind, s eine Zahl von 0 bis 1 ist und die Beziehung r + t + 2s = 2 gilt. Die Cristobalitbildung verläuft im Temperaturbereich von 500 bis 1700° C, vorzugsweise bei 1200 bis 1400° C. Die Umwandlung von H-SKS-1 in Cristobalit läuft z.B. bei 1250° C in 1 h ab.

Beispielsweise entsteht auch aus Nickel -und Kobaltdisilikat mit schichtstruktur (Ni-SKS-6 und Co-SKS-6) beim Erhitzen auf 1100° C Cristobalit.

Die eingesetzten Ammoniumverbindungen spalten bereits bei schwachem Erhitzen Ammoniak ab und bilden die entsprechende saure Verbindung.

Der Anteil der zweiwertigen Ionen geht beim Tempern vermutlich in die entsprechenden Meta- oder Orthosilikate über. Bei Einsatz von Verbindungen, die frei sind von zweiwertigen Kationen, lassen sich Formkörper aus $\alpha$-Cristobalit mit mindestens 99 % $SiO_2$ (gemessen nach Glühen bei 1000° C) herstellen. Besonders eignen sich für dieses Verfahren wegen ihrer leichten Zugänglichkeit die metallfreien Schichtkieselsäuren H-SKS-1, H-SKS-2 und H-SKS-6.

Formkörper aus Gristobalit lassen sich nicht nur aus den freien Schichtkieselsäuren sondern auch aus sauren Alkalimetallsalzen der Schichtkieselsäuren $H_2Si_2O_5$ mit geringen Gehalten an Alkalimetallionen erzeugen. Diese Alkalisalze besitzen die allgemeine Formel $M_{2-x}H_xSi_2O_5$, wobei M für $Na^+$, $Li^+$ und/oder $K^+$ steht und x eine Zahl von 1,5 bis 2 bedeutet. Auch diese Schichtkieselsäure-Salze werden bei 500 bis 1700°, vorzugsweise bei 800 bis 1400, insbesondere bei 800 bis 1250° C, so lange getempert, bis die Umwandlung in Cristobalit stattgefunden hat.

Beispielsweise kann man die Verbindung Na-SKS-5 mit Wasser waschen und so einen Teil des Natriums durch Protonen ersetzen. Das erhaltene neue Produkt ("Na-SKS-17") weist die ungefähre Zusammensetzung $Na_{0,5}$ $H_{1,5}$ $Si_2$ $O_5$ auf. Bei diesem Produkt genügt schon ein Tempern bei 800° C zur Herstellung eines Formkörpers, der weitgehend aus Cristobalit besteht und bei dem die stärkste Linie im Röntgenbeugungsdiagramm, die zu $\alpha$-Tridymit gehört, nur 6 % der Intensität der stärksten Linie für $\alpha$-Cristobalit aufweist. Mit höheren Atomverhältnissen Na/Si wird der Anteil an Tridymit im gebildeten Formkörper auf Kosten von Cristobalit immer höher.

Verwendet man zur Herstellung von Formkörpern aus Cristobalit freie Schichtkieselsäuren ohne Zusätze, so zeigen die erhaltenen Formkörper im Röntgenbeugungsspektrum fast nur die Reflexe von $\alpha$-Gristobalit, gegebenenfalls auch noch die von Quarz oder Tridymit. Dabei beträgt im allgemeinen die Intensität jeder Linie, die nicht dem Cristobalit zugeordnet werden kann, maximal 20 % der Intensität der stärksten Linie des Cristobalits. So läßt sich durch Tempern eines aus H-SKS-1 oder H-SKS-2 hergestellten Formlings ein Formkörper aus Cristobalit herstellen, dessen Röntgenbeugungsspektrum außer den Linien des $\alpha$-Cristobalits praktisch keine Linien von $SiO_2$-Modifikationen enthält. In diesem Fall beträgt die Intensität jeder Linie, die nicht dem Cristobalit zugeordnet werden kann, zwischen 0 und 3 % der stärksten Cristobalit-Linie. Bei Verwendung von H-SKS-5 und H-SKS-6 als Ausgangsmaterial beträgt die Intensität jeder Linie, die nicht dem Cristobalit zugeordnet werden kann, zwischen 0 und 7 % der stärksten Cristobalit-Linie.

Wie aus den Röntgenaufnahmen hervorgeht, entsteht aus H-SKS-2 sowohl bei 1200°, 1250°, 1400° und 1500° C immer fast reiner Cristobalit. Die erreichte Kristallinität wird insbesondere durch Erhöhung der Temper-Temperatur verbessert.

Besonders günstig verhalten sich Formlinge aus H-SKS-5. Diese wandeln sich schon bei 800° C in Cristobalit-Formkörper um, wobei das Röntgenbeugungsdiagramm einer zerkleinerten Probe dieser Formkörper nur peaks von $\alpha$-Cristobalit aufweist.

Es ist bekannt, daß sich aus einer Schichtkieselsäure der Formel $H_2Si_8O_{17}$ . 1,1 $H_2O$ bei Temperaturen oberhalb 800° C Cristobalit bildet. Jedoch wurde auf diese Weise noch kein Cristobalit-Formkörper hergestellt.

Wenn man dagegen H-SKS-1 bei 1250° C erst in Cristobalit-Pulver überführt, so gelingt es kaum, hieraus (in Abwesenheit von Bindemitteln) zu Formkörpern zu gelangen, da die durch Verpressen bei 500 bar erhaltenen Formlinge - im Gegensatz zu solchen aus H-SKS-1 - beim Entfernen aus der Form wieder zerfallen.

Zu Formkörpern aus Tridymit kann man gelangen, wenn man als Ausgangsmaterial pulverförmige Alkalisalze von Schichtkieselsäuren der allgemeinen Formel

$$M^I_r \; M^{II}_s \; H_t \; Si_y \; O_{2y+1}$$

verwendet, wobei $M^I$ Lithium, Natrium und/oder Kalium bedeutet, $M^{II}$ Magnesium und/oder Kalzium bedeutet, y eine Zahl von 3-24, vorzugsweise 5-24, r eine Zahl von 0,5 bis 2 ist, s eine Zahl von 0 bis 0,75 ist, t eine Zahl von 0 bis 0,5 ist, mit der Maßgabe, daß r + 2s + t = 2 gilt, und man die erhaltenen Formlinge bei Temperaturen von 500 bis 1600° C, vorzugsweise 1200 bis 1400° C, so lange tempert, bis sich Formkörper aus Tridymit gebildet haben. Beispielsweise entsteht aus Ca-SKS-1 bei 1250°, und noch rascher bei 1400° C, Tridymit neben etwas Cristobalit. Aus Ca-SKS-2 entsteht unter gleichen Bedingungen Tridymit mit noch weniger Cristobalit.

Die Gegenwart von Fremdionen ist nach Literaturangaben für die Umwandlung in Tridymit erforderlich. Dennoch lassen sich auf diese Weise Formkörper, die überwiegend aus Tridymit bestehen und einen Gehalt als $SiO_2$ (frei oder gebunden) von mindestens 94 Gew.-% (bestimmt nach Glühen bei 1000° C) herstellen. Im Röntgenbeugungsdiagramm beträgt die Intensität Jeder Linie, die nicht dem Tridymit zugeordnet werden kann, maximal 20 % der Intensität der stärksten Linie des Tridymits. Bei Einsatz von Na-SKS-2 beträgt diese Intensität nur 12 % der stärksten Tridymit-Linie.

Ein Glühen zur Bestimmung des $SiO_2$-Gehalts ist gemäß DIN 55921, Blatt 2 vorgesehen (2 Stunden Glühen bei 1000° C). Bei Formkörpern, die bei Temperaturen oberhalb 1000° C entstanden sind, ist dieses Glühen jedoch entbehrlich. Bei Formkörpern, die bei niedrigeren Temperaturen aus freien Schichtkieselsäuren hergestellt wurden, insbesondere bei 500 bis 700° C, können durch das Glühen noch geringe Mengen chemisch gebundenen Wassers entfernt werden.

Um Formkörper aus Tridymit mit einem möglichst geringen Anteil an Fremdsubstanzen zu erzeugen, werden vorzugsweise Schichtsilikate mit einem niedrigen Alkaligehalt, so z.B. mit Kenyait- oder Magadiit-Struktur (Na-SKS-1 und Na-SKS-2) eingesetzt. Auch hierbei kann noch ein Teil der Alkaliionen durch Protonen ersetzt sein. Dieser Arbeitsweise sind allerdings dadurch Grenzen gesetzt, daß mit sinkendem Alkaligehalt im Ausgangsmaterial beim Tempern in zunehmendem Maß neben Tridymit auch Cristobalit entsteht.

Durch Waschen der erfindungsgemäß erhaltenen Formkörper aus Tridymit mit heißem oder kaltem Wasser läßt sich der Gehalt an Fremdstoffen, insbesondere an Alkalimetallen, verringern. Dies gilt besonders für poröse Formkörper.

Für die Herstellung von Formkörpern aus Tridymit wird als Ausgangsmaterial vorzugsweise Na-SKS-1 oder Na-SKS-2 eingesetzt, da sich auf diese Weise besonders hohe TridymitGehalte erzielen lassen, die zu guter Wasserbeständigkeit und hohem Schmelzpunkt der Formkörper führen. Ebenso geeignet sind die entsprechenden Lithium- oder Kaliumschichtsilikate.

Um Formkörper zu erhalten, die aus einem Gemisch von Cristobalit und Tridymit bestehen, kann man als Ausgangsmaterial ein Alkalischichtsilikat verwenden, in dem ein beträchtlicher Teil der Alkaliionen durch Protonen ersetzt ist oder man kann Gemische von Ausgangsprodukten einsetzen, die zu Cristobalit (Beispiel: Schichtkieselsäuren) und Produkten die zu Tridymit (Beispiel: Alkalischichtsilikate) umgewandelt werden.

Bei der Temperung behalten die Formlinge ihre Gestalt; nur tritt dabei eine gewisse Schrumpfung ein. Diese Schrumpfung beruht auf der Umwandlung des Ausgangsproduktes in den spezifisch dichteren Cristobalit oder Tridymit bei höheren Temperaturen. Die lineare Schrumpfung liegt in der Größenordnung von ca. 10 %, insbesondere bei Verwendung von H-SKS-1 oder H-SKS-2 als Ausgangsmaterial. Die Schrumpfung kann verringert werden, wenn dem Ausgangsmaterial Cristobalit und/oder Tridymit beigemischt wird. Bei Umwandlung in Cristobalit lassen sich dem Ausgangsprodukt 10 bis 80 Gew.-%, vorzugsweise 30 bis 60 Gew.-% Cristobalit, bezogen auf das umzuwandelnde Schichtsilikat, zumischen. Auch bei der Herstellung von Formkörpern aus Tridymit kann in analoger Weise durch das Beimischen von Tridymit zum Ausgangsmaterial (z.B. Na-SKS-2) die Schrumpfung verringert werden.

Es ist überraschend, daß reine Pulver aus Schichtkieselsäure - im Gegensatz zu Pulvern aus Cristobalit - bereits beim Verpressen stabile Formlinge ergeben. Es ist jedoch in manchen Fällen vorteilhaft, dem Ausgangsmaterial in geringen Mengen, insbesondere in Mengen bis zu 10 Gew.-%, anorganische oder organische Bindemittel zuzufügen. So wird z.B. durch die Mitverwendung von Kieselsol die offene Porosität des Endproduktes herabgesetzt. Ein Zusatz von Tonen oder Kaolin erhöht die plastische Verformbarkeit der Ausgangsmasse. Übliche organische Bindemittel sind Sulfitablauge, Dextrin, Methylcellulose, Melasse, Glycol oder Glycerin. Da sie die Beständigkeit des Formlings erhöhen, erleichtern sie die Herstellung von dünnwandigen Formkörpern. Vorteilhaft ist, daß sie beim Tempern, insbesondere in Gegenwart von Sauerstoff, sich restlos entfernen lassen.

Beim Tempern nimmt die offene Porosität der Formlinge ab. Dennoch weisen die erzeugten Formkörper im allgemeinen offene Porositäten von mindestens 30 % auf. Porenbildende Zusätze sind nur dann erforderlich, wenn besonders hohe Porositäten gewünscht werden. Die Porenbildner werden thermisch aus den Formkörpern entfernt. Als geeigneter porenbildender Zusatz hat sich Holzmehl oder Stärke erwie

Schichtkieselsäuren einsetzt, ist der erhaltene Formkörper praktisch frei von Calcium. Es lassen sich daher Formkörper mit einem Kalziumgehalt von unter 0,02 Gew--% erzeugen. Demgegenüber liegt der Kalziumgehalt der Silikasteine höher und ihr Erweichungspunkt niedriger.

Die Porositäten werden nach DIN 51056 im Vakuum mit Wasser bestimmt. Da die erfindungsgemäß hergestellten Formkörper eine hohe Porosität aufweisen, sind sie besonders geeignet zur Tränkung mit wäßrigen Lösungen oder Lösungen in organischen Lösemittel. Sie lassen sich deshalb als Träger für Katalysatoren verwenden. Beispielsweise kann man sie mit Metallsalzlösungen, wie z.B. Lösungen von Kupfernitrat, Nickelnitrat oder Kobaltacetat, tränken, anschließend durch Erhitzen das Lösungsmittel, insbesondere Wasser, verdunsten, die Metallsalze gegebenenfalls zu ihren Oxiden zersetzen und diese zu den entsprechenden Metallen reduzieren (z.B. mit Wasserstoff). Um die Tränkung der Formkörper zu fördern, können die Metallsalzlösungen nichtionische oder anionische Netzmittel, wie z.B. oxethylierte Alkylphenole oder Alkylarylsulfonate enthalten. Ausgehend von Kupfernitrat erhält man auf diese Weise Hydrierungskatalysatoren, insbesondere für die Gasphase.

Formkörper mit hoher Porosität eignen sich zur thermischen Isolation in einem weiten Temperaturbereich, beispielsweise im Bereich von 0 °C bis 1300 °C.

Durch Anwendung hoher Preßdrucke und Evakuieren während des Verpressens lassen sich Formlinge mit einer hohen Dichte erzeugen. Aus ihnen kann man Formkörper erzeugen, die praktisch nicht mehr porös sind. Diese können überall dort eingesetzt werden, wo harte, dichte keramische Körper benötigt werden, so z.B. als Ofenausmauerung, für hitzefeste Rohre oder Gefäße oder als Motorenteile. Diese kera mischen Körper können bei Temperaturen bis oberhalb 1500 °C eingesetzt werden, wenn sie aus Cristobalit bestehen. Der Anwendungsbereich ist nach oben durch den Schmelzpunkt von Cristobalit (1700 °C) begrenzt. Je weniger Beimengungen der Körper neben Cristobalit enthält, umso höher ist die Schmelztemperatur. Auch die erfindungsgemäß hergestellten Formkörper aus Tridymit können eingesetzt werden; jedoch ist hier der Schmelzpunkt wegen der zwangsläufigen Beimengungen an Alkaliverbindungen etwas niedriger, so daß diese Körper nur bis etwa 1500° einsetzbar sind.

Die Erfindung wird durch die Beispiele näher erläutert.

Beispiel 1

300 g Na-SKS-1 werden mit 240 g $H_2O$ angefeuchtet und durch einen Extruder gegeben. Es entstehen kurze Stränge von 3 mm Durchmesser und 4 mm Länge. Diese werden anschließend in einer Pelletiertrommel zu Granalien ohne Kanten abgerundet. Diese werden bei 120 °C 2 Stunden getrocknet. Die Härte gemessen mit dem Hardness-Tester von Chas. Pfizer Co., Inc., New York beträgt 3 kg. Der Hardness-Tester ist eine Prüfzange für Tabletten. Unter Berücksichtigung der Stempelfläche von 3.1 $mm^2$ , über die der Druck auf den Prüfkörper ausgeübt wird, ergibt sich für die Umrechnung der Meßwerte in bar ein Faktor von 3,2, d.h. 3 kg entsprechen 9.6 bar.

Die Granalien werden bei 1250 °C 4 Stunden getempert. Die getemperten Granalien sind wasserbeständig und halten im Hardness-Tester einen Druck von 23 bar aus. Das Röntgenbeugungsspektrum ist das des $\alpha$-Tridymits (low temperature form).

Beispiel 2

400 g Na-SKS-2 werden mit 320 g $H_2O$ angefeuchtet und daraus Granalien hergestellt, die anschließend, wie in Beispiel 1 beschrieben, getempert werden.Die Granalien bestehen in der Hauptsache aus $\alpha$-Tridymit. Sie sind wasserbeständig und halten im Hardness-Tester einen Druck von 27,5 bar aus. Analysenergebnis: $SiO_2$ : 94 %; CaO: 0.017 %; $Al_2O_3$ : 0,55%; $Fe_2O_3$ : 0,12 %; $Na_2O$ : 4.99 %.

Beispiel 3

H-SKS-1 wird durch Reaktion von Na-SKS-1 mit Salzsäure hergestellt. Aus feuchtem H-SKS-1 werden nach dem Verfahren von Beispiel 1 Granalien hergestellt. Die bei 1250 °C getemperten Granalien halten im Hardness-Tester einen Druck von 21 bar aus und sind wasserbeständig. Das Röntgenbeugungsspektrum ist das von $\alpha$-Cristobalit. Analysenergebnis: $SiO_2$ : 99 %; CaO : 0,008 %; $Al_2O_3$ : 0,38 %; $Fe_2O_3$ : 0,04 %; $Na_2O$ : 0,10 %.

Beispiel 4

5,22 g pulverförmiges, trockenes Na-SKS-1 werden in einer röhrenförmigen Presse mit 16 mm Innendurchmesser unter einem Stempeldruck von 500 bar 5 Minuten verpreßt und anschließend 4 Stunden bei 1250 °C getempert. Der so erhaltene rohe zylindrische Formkörper aus Tridymit (Durchmesser 13,4 mm) hat die Shore-Härte (D nach DIN 53505) 77 und die Dichte 1,91. Die offene Porosität (nach DIN 51056-A-2) beträgt 22 %.

Beispiel 5

6,0 g Na-SKS-2 werden wie in Beispiel 4 zu einem zylindrischen Formkörper von 16,3 mm Durchmesser verpreßt. Der Formkörper hat die Shore-Härte 60 und die Dichte 1,04. Er wird bei 1250 °C getempert und hat die Dichte 1,72 und die ShoreHärte 75. Sein Durchmesser beträgt 14,8 mm, die lineare Schrumpfung also 9 %. Das Röntgenbeugungsspektrum ist das von α-Tridymit. Der $SiO_2$-Gehalt beträgt über 94,0 %.

Beispiel 6

Frisch hergestelltes und mit Wasser gewaschenes H-SKS-1 wird bei 100 °C getrocknet. Davon werden 4,99 g wie in Beispiel 4 mit einem Stempeldruck von 500 bar zu einem zylindrischen Formkörper von 16,4 mm Durchmesser und 20,9 mm Höhe verpreßt. Der Formkörper wird bei 1250 °C 4 Stunden getempert, ist dann wasserbeständig und hat die Dichte 1,45. Die Abmessungen betragen: Durchmesser 14,7 mm und Höhe 19,1 mm. Die lineare Schrumpfung betrug damit 10 bzw. 9 %. Die offene Porosität hat einen Wert von 31 %. Das Röntgenbeugungsspektrum ist das des α-Cristobalits. Der $SiO_2$-Gehalt liegt über 99 Gew.-%.

Beispiel 7

Beispiel 6 wird mit einem Stempeldruck von 200 bar wiederholt. Die offene Porosität des getemperten Körpers (4 h, 1250 °C) liegt bei 39 %.

Beispiel 8

Frisch hergestelltes und mit Wasser gewaschenes H-SKS-2 wird bei 100 °C getrocknet. Davon werden 4,06 g wie in Beispiel 4 zu einem zylindrischen Formkörper von 16,3 mm Durchmesser und 22,7 mm Höhe verpreßt. Der Formkörper wird bei 1500 °C 4 Stunden getempert und hat dann die Shore-Härte 70 und die Dichte 1,97. Er ist wasserbeständig. Die offene Porosität beträgt nur noch 9%. Der Körper hat die Abmess ungen: Durchmesser 12,7mm und Höhe 18,6 mm. Das entspricht einer linearen Schrumpfung von 22 bzw. 18 %. Der Körper besteht in der Hauptsache aus Cristobalit. Der $SiO_2$-Gehalt liegt Ober 99 Gew.-%.

Beispiel 9

Beispiel 8 wird wiederholt, jedoch werden die Temperbedingungen variiert. Der Grad der Kristallinität wird angegeben durch die Höhe des stärksten für Cristobalit charakteristischen peaks im Röntgenbeugungs-Spektrum bei $4,05 \times 10^{-8}$ cm. Die Ergebnisse sind in der folgenden Tabelle dargestellt.

| Temperatur | Zeit | Höhe des peaks |
|---|---|---|
| 1100 (°C) | 4 (h) | ~ 1 (cm) = amorph |
| 1200 | 7 | 9 |
| 1250 | 1 | 23.3 |
| 1250 | 4 | 24 |
| 1400 | 0.5 | 11 |
| 1400 | 4 | >24 |
| 1500 | 4 | >24 |

Beispiel 10

Aus H-SKS-1 werden durch Pressen bei 480 bar in einem zylinderförmigen Rohr mit Stempel Formkörper hergestellt, die einen Durchmesser von 51,4 mm und eine Höhe von ca. 50 mm haben. Die Dichte beträgt 1,05. Nach 4 Stunden Tempern bei 1500° C hat der Körper eine Dichte von 1,64 und die Shore-Härte 82. Der Körper besteht in der Hauptsache aus Cristobalit. Der $SiO_2$-Gehalt liegt über 99 Gew.-%.

Beispiel 11

Ein in Beispiel 6 beschriebener, bei 1250° C getemperter Formkörper aus Cristobalit wird mit 0,35 $cm^3/cm^3$ einer 10%igen wäßrigen Lösung von $Cu(NO_3)_2 \cdot 2 H_2O$ im Vakuum getränkt.

Der getränkte Formkörper wird getrocknet und anschließend 2 Stunden bei 350° C gehalten. Das Kupfernitrat zersetzt sich dabei zu CuO. Nach Reduktion im Wasserstoff/Stickstoff-Gemisch ist der Formkörper als Hydrierungskatalysator in der Gasphase geeignet.

Beispiel 12

80 g Na-SKS-5 werden in 1 1 destilliertem Wasser unter Rühren bei Raumtemperatur aufgeschlämmt. Nach 1 h wird das Produkt abfiltriert, 2 h bei 100° C getrocknet und in der Schlagkreuzmühle gemahlen.

Das so erhaltene Produkt hat die ungefähre Zusammensetzung $Na_{0,5}H_{1,5}Si_2O_5$ und erhielt die Bezeichnung Na-SKS-17.

Es weist folgendes Röntgenbeugungsspektrum auf:

| d | $J/J_o$ |
|---|---|
| $9,60 \cdot 10^{-8}$ cm | 100 |
| 4,77 | 31 |
| 3,77 | 41 |
| 3,51 | 40 |
| 3,17 | 72 |

4,8 g Na-SKS-17 werden wie in Beispiel 4 zu einem zylindrischen Formkörper verpreßt. Nach 4 h Tempern bei 800° C besteht der Formkörper aus Cristobalit. Die stärkste Linie im Röntgenbeugungsspektrum, die zu

α-Tridymit gehört, weist nur 6 % der Intensität der stärksten Linie für α-Gristobalit auf.

Beispiel 13

Aus H-SKS-1 wird in einer beheizten Presse bei 600 bar und 240 °C eine kreisförmige Platte von ca. 70 mm Durchmesser und 2 mm Dicke hergestellt. Sie ist wesentlich fester als eine bei Raumtemperatur gepreßte Platte.

Beim weiteren Erhitzen (1250 °C, 1 h) entsteht aus ihr eine Platte aus Cristobalit.

Beispiel 14

Eine aus H-SKS-2 gepreßte Platte (Durchmesser 64 mm) wurde 4 h bei 1250 °C getempert und dabei in eine Cristobalit-Platte umgewandelt. Danach betrug der Durchmesser nur noch 60 mm (lineare Schrumpfung 6.3 %).

Verwendet man dagegen als Ausgangsprodukt ein pulverförmiges Gemisch von 70 % H-SKS-2 und 30 % Cristobalit, so entsteht eine Cristobalit-Platte mit dem Durchmesser 62 mm (lineare Schrumpfung 3,1 %).

Beispiel 15 (Darstellung von Na-SKS-1)

Man stellt zunächst eine Reaktionsmischung der molaren Zusammensetzung

$0{,}303\ Na_2O : 0{,}0052\ Al_2O_3 : SiO_2 : 30\ H_2O$

dadurch her, daß man 83,5 Gewichtsteile Natronwasserglas (27 % $SiO_2$, 8,43 % $Na_2O$, 0,24 % $Al_2O_3$) zu 149 Teilen Wasser gibt. Danach wird ein Teil eines filterfeuchten kristallinen Natriumsilikats aus einem früheren Versuch (71 % Gewichtsverlust durch Erhitzen auf 1200 °C; für die Berechnung der molaren Zusammensetzung wurde nur der Wasseranteil berücksichtigt) zugegeben. Man setzt anschließend langsam unter Rühren 4,93 Teile 96 %ige Schwefelsäure zu. Danach hat die Reaktionsmischung folgende molare Zusammensetzung:

$0{,}174\ Na_2O : 0{,}0052\ Al_2O_3 : SiO_2 : 0{,}129\ Na_2SO_4 : 30\ H_2O$.

Die Reaktionsmischung wird in einem Edelstahl-Autoklaven innerhalb von 1,5 Stunden auf 205 °C erhitzt, 2,5 Stunden bei dieser Temperatur gehalten und anschließend langsam abgekühlt. Nach dem Abkühlen wird die Reaktionsmischung filtriert, mit Wasser gewaschen und auf einer Nutsche trockengesaugt. Das filterfeuchte Produkt weist einen Glühverlust von 55 % auf. Das an der Luft kurzzeitig getrocknete Produkt wird thermogravimetrisch untersucht. Bis zu einer Temperatur von etwa 140 °C ist ein Gewichtsverlust von 43 % eingetreten. Bis ca. 1000 °C wird keine weitere wesentliche Gewichtsabnahme beobachtet. Das bei 120 °C bis zur Gewichtskonstanz getrocknete Produkt, Na-SKS-1, zeigt folgende elementar-analytische Zusammensetzung: 3,8 % Na, 0,24 % Al, 41,5 % Si und 0,003 % Fe. Es läßt sich daraus ein molares $SiO_2/Na_2O$-Verhältnis von 17,9 errechnen.

Beispiel 16 (Darstellung von H-SKS-1)

Das kristalline Na-Silikat aus Beispiel 15 wird zweimal mit 5 %iger Salzsäure bei 80 °C 15 Minuten lang extrahiert. Man wäscht, filtriert und trocknet bei 40 °C. Die Untersuchung der differentiellen Thermoanalyse ergibt eine ausgeprägte endotherme Umwandlung bei etwa 120 °C und eine weit weniger ausgeprägte endotherme Umwandlung bei etwa 1180 °C.

Beispiel 17 (Darstellung von Na-SKS-2)

Das Produkt wird mit gleicher Eduktzusammensetzung wie in Beispiel 15 hergestellt. Der Reaktionsmischung werden Impfkristalle eines Magadiit-artigen Silikats aus einem früheren Versuch zugesetzt. Die Reaktionsmischung wird 19 Stunden bei 165 °C gerührt, nach dem Erkalten filtriert, mit Wasser gewaschen und auf einer Nutsche trockengesaugt. 10 g der Mutterlauge der Reaktionsmischung, mit 250 ml Wasser verdünnt, haben einen pH-Wert von 10,4. Das filterfeuchte Produkt, welches beim Glühen (>1000 °C) 61,3 % seines Gewichtes verliert, wird mit Schwefelsäure titriert und aus dem Wendepunkt der Titrationskurve

bei pH 5,0 ein Äquivalenzwert von 215 meq/100 g geglühtes Produkt ermittelt. Für ein Produkt der Zusammensetzung $Na_2O \cdot ySiO_2$ wird hieraus ein Ionenaustauschvermögen von 138 mmol $Na^+$/mol $SiO_2$, entsprechend einem $SiO_2$:$Na_2O$-Verhältnis von 14,5 : 1 ermittelt. Arbeitet man ohne Impfkristalle, so werden deutlich längere Reaktionszeiten erforderlich.

Beispiel 18 (Darstellung von H-SKS-2)

100 g feuchtes Produkt aus Beispiel 17 werden zu 200 ml 5%iger Salzsäure gegeben und 1,25 Stunden bei Raumtemperatur gerührt. Das Produkt wird filtriert, erneut zu einer gleichen Menge Salzsäure gegeben, 25 Stunden gerührt, filtriert und zweimal gründlich mit Wasser gewaschen, wobei das Produkt mit Wasser gerührt wird und bei der Filtration gewaschen wird. Anschließend wird das Produkt trockengesaugt. Es weist einen Glühverlust von 57 % auf. Von dem trockengesaugten Produkt werden 10 g zu 1900 ml 5 %iger NaCl-Lösung gegeben und anschließend mit 1m NaOH titriert. Bei der graphischen Darstellung der Titrationswerte wird aus dem Wendepunkt der Kurve bei pH 8,3 ein Äquivalenzwert von 235 mmol $H^+$/100 g geglühtes Produkt ermittelt. Daraus wird ein Ionenaustauschvermögen von etwa 144 meq/mol $SiO_2$, entsprechend einem $SiO_2$ : $Na_2O$-Verhältnis bzw. einem Verhältnis $SiO_2/2H^+$ von 13,9 : 1 bestimmt.

## Ansprüche

1. Verfahren zur Herstellung von Formkörpern aus silikatischem Material durch Extrudieren und/oder Pelletieren sowie anschließendes Tempern, dadurch gekennzeichnet, daß man pulverförmige Schichtkieselsäuren der allgemeinen Formel $H_2Si_yO_{2y+1}$, wobei y eine Zahl von 1,7 bis 24 ist, oder deren Salze, in denen H ganz oder teilweise durch mindestens ein Kation aus der Gruppe $Li^+$, $Na^+$, $K^+$, $NH_4^+$, $Ca^{2+}$, $Cu^{2+}$, $Co^{2+}$, $Ni^{2+}$ und $Mg^{2+}$ ersetzt ist, mit Wasser oder einem organischen Lösemittel vermischt, die Mischung zu walzen- oder röhrenförmigen Formlingen extrudiert und/oder pelletiert, dann trocknet und unter solchen Bedingungen tempert, daß das Ausgangsmaterial in der Hauptsache in Cristobalit und/oder Tridymit umgewandelt wird.

2. Verfahren zur Herstellung von Formkörpern aus silikatischem Material durch Verpressen und Tempern, dadurch gekennzeichnet, daß man pulverförmige Schichtkieselsäuren der allgemeinen Formel $H_2Si_yO_{2y+1}$, wobei y eine Zahl von 1,7 bis 24 ist, oder deren Salze, in denen H ganz oder teilweise durch mindestens ein Kation aus der Gruppe $Li^+$, $Na^+$, $K^+$, $NH_4^+$, $Ca^{2+}$, $Mg^{2+}$, $Cu^{2+}$, $Co^{2+}$, $Ni^{2+}$ und $Mg^{2+}$ ersetzt ist, in einem Formwerkzeug unter Druck zu Formlingen verpreßt und man die Formlinge während oder nach dem Pressen unter solchen Bedingungen tempert, daß das Ausgangsmaterial in der Hauptsache in Cristobalit und/oder Tridymit umgewandelt wird.

3. Verfahren gemäß Anspruch 1 oder 2, dadurch gekennzeichnet, daß man als Ausgangsmaterial pulverförmige Schichtsilikate der allgemeiner Formel $(NH_4)_rM_sH_tSi_yO_{2y+1}$ verwendet, wobei M für die Kationen $Cu^{2+}$, $Co^{2+}$ und/oder $Ni^{2+}$ steht, r und t Zahlen von 0 bis 2 sind, s eine Zahl von 0 bis 1 ist und r + t + 2s = 2 gilt, und man die erhaltenen Formlinge bei 500 bis 1700 °C, vorzugsweise bei 1200 bis 1400 °C, so lange tempert, bis die Umwandlung in Cristobalit Stattgefunden hat.

4. Verfahren gemäB Anspruch 1 oder 2, dadurch gekennzeichnet, daß man als Ausgangsmaterial pulverförmige Alkalisalze von Schichtkieselsäuren der allgemeinen Formel

$$M^I_r M^{II}_s H_t Si_y O_{2y+1}$$

verwendet, wobei $M^I$ Li, Na und/oder K bedeutet, $M^{II}$ $Mg^{2+}$ und/oder $Ca^{2+}$ bedeutet, r eine Zahl von 0,5 bis 2 ist, s eine Zahl von 0 bis 0,75 ist, t eine Zahl von 0 bis 1,5 ist, mit der Maßgabe, daß r + 2s + t = 2 gilt, und man die erhaltenen Formlinge bei Temperaturen von 500 bis 1600 °C, vorzugsweise 1200 bis 1400 °C, so lange tempert, bis sich Formkörper aus Tridymit gebildet haben.

5. Verfahren nach Anspruch 1 oder 2, dadurch gekennzeichnet, daß man als Ausgangsmaterial Schichtkieselsäuren oder Alkalisalze von Schichtkieselsäuren der ZusammenSetzung $M_{2-x}H_xSi_2O_5$ einsetzt, wobei M für $Na^+$, $Li^+$ und/oder $K^+$ steht und x eine Zahl von 1,5 bis 2 bedeutet und man die erhaltenen Formlinge bei 500 bis 1700 °C, vorzugsweise bei 800-1250 °C, so lange tempert, bis die Umwandlung in Gristobalit stattgefunden hat.

6. Verfahren nach Anspruch 1 oder 2, dadurch gekennzeichnet, daß man dem Ausgangsmaterial pulverförmigen Cristobalit und/oder Tridymit zufügt.

7. Verfahren gemäß Anspruch 2, dadurch gekennzeichnet, daß das Verpressen zu Formlingen nach Anfeuchten des pulverförmigen Ausgangsmaterials mit Wasser oder einem organischen Lösemittel erfolgt.

8. Verfahren nach Anspruch 1 oder 2, dadurch gekennzeichnet, daß man unter Zusatz eines Bindemittels arbeitet.

9. Verfahren gemäß Anspruch 1 oder 2, dadurch gekennzeichnet, daß man dem Ausgangsprodukt Porenbildner zusetzt.

## Claims

1. A process for the production of shaped articles of silicate material by extrusion and/or pelleting and subsequent annealing, which comprises mixing a pulverulent layered silicic acid of the general formula $H_2Si_yO_{2y+1}$, in which y is a number from 1.7 to 24, or a salt thereof, in which all or some of H is replaced by at least one cation from the group comprising $Li^+$, $Na^+$, $K^+$, $NH_4^+$, $Ca^{2+}$, $Cu^{2+}$, $Co^2$ , $Ni^{2+}$ and $Mg^{2+}$, with water or an organic solvent, extruding and/or pelleting the mixture to roll-shaped or tube-shaped pieces and then drying and annealing these under conditions such that the starting material is chiefly converted into cristobalite and/or tridymite.

2. A process for the production of shaped articles of silicate material by pressing and annealing, which comprises pressing a pulverulent layered silicic acid of the general formula $H_2Si_yO_{2y+1}$, in which y is a number from 1.7 to 24, or a salt thereof, in which all or some of the H is replaced by at least one cation from the group comprising $Li^+$, $Na^+$, $K^+$, $NH_4^+$, $Ca^{2+}$, $Mg^{2+}$, $Cu^{2+}$, $Co^{2+}$, $Ni^{2+}$ and $Mg^{2+}$, in a molding tool under pressure to give shaped pieces and annealing the shaped pieces during or after pressing under conditions such that the starting material is chiefly converted into cristobalite and/or tridymite.

3. The process as claimed in either of claims 1 and 2, wherein a pulverulent layered silicate of the general formula $(NH_4)_rM_sH_tSi_yO_{2y+1}$, in which M represents the cations $Cu^{2+}$, $Co^{2+}$ and/or $Ni^{2+}$, r and t are numbers from 0 to 2, s is a number from 0 to 1 and $r + t + 2s = 2$ applies, is used as the starting material and the resulting shaped pieces are annealed at 500 to 1,700 °C, preferably 1,200 to 1,400 °C, until conversion into cristobalite has taken place.

4. The process as claimed in claim 1 or 2, wherein a pulverulent alkali metal salt of a layered silicic acid of the general formula

$$M^{I}_{r}M^{II}_{s}H_{t}Si_{y}O_{2y+1}$$

in which $M^I$ denotes Li, Na and/or K, $M^{II}$ denotes $Mg^{2+}$ and/or $Ca^{2+}$, r is a number from 0.5 to 2, s is a number from 0 to 0.75 and t is a number from 0 to 1.5, with the proviso that $r + 2s + t = 2$ applies, is used as the starting material and the resulting shaped pieces are annealed at temperatures of 500 to 1,600 °C, preferably 1,200 to 1,400 °C, until tridymite shaped articles have formed.

5. The process as claimed in claim 1 or 2, wherein a layered silicic acid or an alkali metal salt of a layered silicic acid of the composition $M_{2-x}H_xSi_2O_5$, in which M represents $Na^+$, $Li^+$ and/or $K^+$ and x

denotes a number from 1.5 to 2, is used as the starting material and the resulting shaped pieces are annealed at 500 to 1,700 °C, preferably at 800-1,250 °C, until conversion into cristobalite has taken place.

6. The process as claimed in claim 1 or 2, wherein pulverulent cristobalite and/or tridymite is added to the starting material.

7. The process as claimed in claim 2, wherein pressing to shaped pieces is carried out after moistening of the pulverulent starting material with water or an organic solvent.

8. The process as claimed in claim 1 or 2, carried out with the addition of a binder.

9. The process as claimed in claim 1 or 2, wherein a pore-forming agent is added to the starting substance.

**Revendications**

1. Procédé de fabrication de corps moulés en une matière siliceuse par extrusion et/ou pastillage puis recuit, procédé caractérisé en ce que l'on mélange avec de l'eau ou un solvant organique des acides phyllosiliciques pulvérulents de formule générale $H_2Si_yO_{2y+1}$ (y étant un nombre de 1,7 à 24) ou des sels de ces acides, dont l'hydrogène est totalement ou partiellement remplacé par un ou plusieurs des cations $Li^+$, $Na^+$, $K^+$, $NH_4{}^+$, $Ca^{2+}$, $Cu^{2+}$, $Co^{2+}$, $Ni^{2+}$ et $Mg^{2+}$, puis on extrude et/ou on pastille le mélange pour en former des agglomérés en rouleaux ou en tubes, que l'on sèche et que l'on recuit ensuite dans des conditions dans lesquelles la matière première est transformée principalement en cristobalite et/ou en tridymite.

2. Procédé de fabrication de corps moulés en une matière siliceuse par pressage et recuit, procédé caractérisé en ce que l'on presse dans un moule sous pression des acides phyllosiliciques pulvérulents de formule générale $H_2Si_yO_{2y+1}$ (y étant un nombre de 1,7 à 24) ou des sels de ces acides, dont l'hydrogène est totalement ou partiellement remplacé par un ou plusieurs des cations $Li^+$, $Na^+$, $K^+$, $NH_4{}^+$, $Ca^{2+}$, $Mg^{2+}$, $Cu^{2+}$, $Co^{2+}$, $Ni^{2+}$ et $Mg^{2+}$, pour en former des agglomérés, que l'on recuit pendant ou après la compression dans des conditions dans lesquelles la matière première est transformée principalement en cristobalite et/ou en tridymite.

3. Procédé selon la revendication 1 ou 2, caractérisé en ce que l'on part de phyllosilicates pulvérulents de formule générale $(NH_4)_rM_sH_tSi_yO_{2y+1}$, M désignant les cations $Cu^{2+}$, $Co^{2+}$ et/ou $Ni^{2+}$, r et t étant des nombres de 0 à 2, s un nombre de 0 à 1 et la somme r + t + 2s = 2, et on recuit les agglomérés formés entre 500 à 1.700 °C, de préférence entre 1.200 et 1.400 °C, jusqu'à ce que se produise la transformation en cristobalite.

4. Procédé selon la revendication 1 ou 2, caractérisé en ce que l'on part de sels alcalins pulvérulents d'acides phyllosiliciques de formule générale

$$M^I_r\ M^{II}_s\ H_t\ Si_y\ O_{2y+1}$$

dans laquelle $M^I$ désigne Li, Na et/ou K, $M^{II}$ $Mg^{2+}$ et/ou $Ca^{2+}$, r un nombre de 0,5 à 2, s un nombre de 0 à 0,75 et t un nombre de 0 à 1 , avec la condition que la somme r + 2s + t = 2, et on recuit les agglomérés obtenus à des températures de 500 à 1.600 °C, de préférence de 1.200 à 1.400 °C, Jusqu'à ce qu'il se soit formé des corps moulés de tridymite.

5. Procédé selon la revendication 1 ou 2, caractérisé en ce que l'on part d'acides phyllosiliciques ou de sels alcalins d'acides phyllosiliciques de composition $M_{2-x}H_xSi_2O_5$, M désignant $Na^+$, $Li^+$ et/ou $K^+$ et x un nombre de 1,5 à 2, et on recuit les agglomérés formés entre 500 et 1.700 °C, de préférence entre 800 et 1.250 °C, jusqu'à ce que se produise la transformation en cristobalite.

6. Procédé selon la revendication 1 ou 2, caractérisé en ce que l'on ajoute à la matière de départ de la cristobalite et/ou de la tridymite en poudre.

7. Procédé selon la revendication 2, caractérisé en ce que l'on forme les agglomérés après avoir humidifié la matière de départ pulvérulente avec de l'eau ou un solvant organique.

8. Procédé selon la revendication 1 ou 2, caractérisé en ce que l'on opère en présence d'un liant.

9. Procédé selon la revendication 1 ou 2, caractérisé en ce que l'on ajoute à la matière de départ une matière formant des pores.